(19)

Europäisches
Patentamt
European
Patent Office
Office européen
des brevets

(11)  EP 2 208 654 B1

(12)  **EUROPEAN PATENT SPECIFICATION**

(45) Date of publication and mention
of the grant of the patent:
**19.06.2013   Bulletin 2013/25**

(51) Int Cl.:
***B60W 30/08*** *(2012.01)*      ***B60W 40/04*** *(2006.01)*

(21) Application number: **09150614.7**

(22) Date of filing: **15.01.2009**

(54)  **Method and system for avoiding host vehicle collisions with a target**

Verfahren und System zur Vermeidung der Kollision eines Fahrzeugs mit einem Ziel

Procédé et système pour éviter les collisions d'un véhicule avec une cible

(84) Designated Contracting States:
**DE GB SE**

(43) Date of publication of application:
**21.07.2010   Bulletin 2010/29**

(73) Proprietor: **Volvo Car Corporation**
**405 31 Göteborg (SE)**

(72) Inventors:
• **Brännström, Mattias**
**414 81 Göteborg (SE)**
• **Coelingh, Erik**
**42470 Olofstorp (SE)**

• **Sjöberg, Jonas**
**43169 Mölndal (SE)**

(74) Representative: **Widahl, Jenny Marie**
**Volvo Car Corporation**
**Intellectual Property**
**Department 50094 HBBVN**
**405 31 Göteborg (SE)**

(56) References cited:
**EP-A- 1 990 250      EP-A- 2 006 181**
**WO-A-2008/031662   DE-A1-102005 002 760**
**US-A1- 2008 040 040   US-A1- 2008 071 469**

EP 2 208 654 B1

## Description

### Technical field

The present invention relates to a method in an automotive vehicle collision avoidance system for autonomous action for avoiding host vehicle collisions with a target in accordance with the preamble of claim 1, which is known from WO-A-2008/031662.

The present invention also relates to an automotive vehicle collision avoidance system for autonomous action for avoiding host vehicle collisions with a target in accordance with the preamble of claim 5, which is known from WO-A-2008/031662.

### Background of the invention

The World Health Organization estimates that traffic accidents annually cause 1.2 million fatalities and as many as 50 million injuries. It is predicted that these figures will increase by 65% over the next 20 years unless there is new commitment to prevention. Despite these large numbers, traffic conflicts are rare events for individuals and thus, drivers can not solely rely on learning from experience to avoid accidents. Fortunately, most drivers are generally good at foreseeing and avoiding potential conflicts at an early stage. However, no human is perfect and a slight distraction or misjudgment may result in an accident. Even if a driver should be perfect, there is still a possibility that another road user makes a mistake that puts the driver in a situation where a collision can not be avoided. Accident research has shown that some accidents are caused by vehicle failure, but most accidents are caused by human errors. One way to reduce the number of accidents and their consequences is to assist road users in their driving task, e.g. by assisting in detecting and handling potential hazards. This is called active safety or in more general terms preventive safety, ranging from drowsiness detection to electronic stability control to night vision systems.

An important subset of preventive safety is collision avoidance systems, aiming at assisting the driver in avoiding collisions with objects and other road users, e.g. vehicles, bicyclists or pedestrians. As automotive safety is gaining interest from the general public and governments, vehicle manufacturers are introducing an increasing amount of driver assistance features. Several manufactures now offer functionality that help the driver in avoiding collisions by providing warnings or even automatic intervention braking when a collision is imminent. This collision avoidance technology is often applied to rear end collisions with both stationary and moving vehicles. One reason behind this is that rear end collisions are common accident scenarios which are generally estimated to account for 29% of all police reported accidents and 5% of all fatalities. Another reason is that the kinematics of rear end collisions are relatively easy to predict, making threat assessment and decision making more straightforward. Threat assessment is commonly used denotation for algorithms that estimated how road users can maneuver to avoid a potential collision.

State-of-the-art collision avoidance technology relies on in-vehicle sensors like radars and cameras that constantly monitor the area in front of the vehicle. If the vehicle approaches another vehicle and the driver needs to undertake an action to avoid an accident, an audible and/or visible warning is provided in order to increase the driver's attention in such a way that he or she can avoid or mitigate the accident. If the driver does not intervene in spite of the warning and the collision threat becomes imminent, intervention braking is automatically applied to slow down the vehicle. Imminent refers to the situation where it is judged that an accident cannot physically be avoided by the driver through braking, steering or accelerating. In this way it may not be possible for the collision avoidance/collision mitigation system to always avoid a collision, but the main purpose here is to reduce impact speed and the risk of consequences.

Thus, collision avoidance systems may use sensors such as RADAR (RAdio Detection And Ranging), LIDAR (Light Detection And Ranging) and cameras to monitor the region in front of the host vehicle. A tracking algorithm may be used to estimate the state of the objects ahead (targets) and a decision algorithm may use the estimated states to determine any action, e.g. warning the driver, autonomous braking or steering.

The decision algorithms in automotive collision avoidance systems continuously evaluate the risk for a collision. However, in such an evaluation, previous systems have been unable or have had limited abilities for assessing threats originating from turning objects and assisting the driver of a host vehicle in avoiding collisions with such turning objects.

### Summary of the invention

One object of the invention is to provide an improved method in an automotive vehicle collision avoidance system for autonomous action for avoiding or at least mitigating host vehicle collisions with a target.

This object is achieved by the method as claimed in claim 1.

Thanks to the provision of the steps of: providing estimates on the host vehicle state and the target state; and predicting the motion of the target with an arbitrary motion model during a limited prediction horizon; and dividing the prediction horizon into a series of discrete time steps; and representing the target as a polygon of arbitrary shape; and establishing boundaries of the polygon that a host vehicle need to avoid for each time step; and estimating, using analytical solutions and a motion model for the host vehicle having two degrees of freedom, for each such boundary how the host vehicle need to execute a collision avoidance maneuver in order to avoid reaching said boundary at that specific time step; and autonomously executing a collision avoidance maneuver based on the result of said estimation for all discrete time steps, a method in an automotive vehicle collision avoidance system for autonomous action having improved abilities for avoiding or at least mitigating collisions with target objects is provided.

A further object of the invention is to provide an improved automotive vehicle collision avoidance system for autonomous action for avoiding or at least mitigating host vehicle collisions with a target.

This object is achieved by the system as claimed in claim 5.

Thanks to the provision of: means for providing estimates on the host vehicle state and the target state; and means for predicting the motion of the target with an arbitrary motion model during a limited prediction horizon; and means for dividing the prediction horizon into a series of discrete time steps; and means for representing the target as a polygon of arbitrary shape; and means for establishing boundaries of the polygon that a host vehicle need to avoid for each time step; and means for estimating, using analytical solutions and a motion model for the host vehicle having two degrees of freedom, for each such boundary how the host vehicle need to execute a collision avoidance maneuver in order to avoid reaching said boundary at that specific time step; and means for autonomously executing a collision avoidance maneuver based on the result of said estimation for all discrete time steps, an improved automotive vehicle collision avoidance system for autonomous action having improved abilities for avoiding or at least mitigating collisions with target objects is provided.

Preferred embodiments are listed in the dependent claims.

## Description of drawings

In the following, the invention will be described in greater detail by way of example only with reference to attached drawings, in which

Fig. 1 is a schematic illustration of a bicycle model for describing the motion of a host vehicle,

Fig. 2 illustrates schematically the predicted future position of a turning target in discrete time steps,

Fig. 3 illustrates avoiding the corners of a target with a front end of a host vehicle,

Fig. 4 illustrates avoiding the corners of a target with a rear end of a host vehicle,

Fig. 5 illustrates division of the target into edges and assessing how to avoid each edge through either braking or acceleration,

Fig. 6 illustrates brake profiles with one degree of freedom.

Still other objects and features of the present invention will become apparent from the following detailed description considered in conjunction with the accompanying drawings. It is to be understood, however, that the drawings are designed solely for purposes of illustration and not as a definition of the limits of the invention, for which reference should be made to the appended claims. It should be further understood that the drawings are not necessarily drawn to scale and that, unless otherwise indicated, they are merely intended to conceptually illustrate the structures and procedures described herein.

## Description of embodiments

The present invention relates to threat assessment for assisting a driver of a vehicle in avoiding collision with an object, especially a turning object, denoted as a target. Accidents with crossing vehicles account for approximately 26% of all police-reported accidents. One of the main challenges for collision avoidance technology is to predict the kinematics of the scenario and judge whether a collision is imminent. Compared to rear end collision there are two main differences, as will be exemplified in the following.

Firstly, the orientation of the target is changing over time. In rear end collisions only the rearside of the target vehicle is of interest and this side is always approached at approximately 90 degrees angle. For turning targets the front, rear and side of the target has to be taken into account, i.e. has to be avoided, and the part that is relevant depends on target velocity and orientation.

Secondly, the possibility for a crossing target to avoid an accident is different. Target vehicles that are hit from the rear have limited possibility to avoid, as the driver normally will have limited possibilities to detect the striking vehicle and limited possibilities to take evasive action, especially when the target vehicle is stationary. In intersection scenarios the driver of a target vehicle will have better possibilities to detect a striking vehicle and steering, braking and acceleration may be used for avoiding a collision.

In the following the vehicle hosting the collision avoidance system will be denoted as the host vehicle. It is assumed that the there are no restrictions regarding the driveable area and that the host vehicle will need to avoid collision with a single road user, hereafter denoted as the target. Furthermore, it is assumed that the host vehicle has access to good estimates on the host vehicle state and the target state, e.g. its dimensions, velocity, acceleration, yaw rate and orientation. These estimates may be obtained through an in-vehicle sensor fusion system, possibly combined with vehicle to vehicle communication.

In accordance with the invention threat assessment will be performed for both the host vehicle and a target vehicle, i.e. it will be estimated how difficult it is for the host vehicle to avoid a collision and how difficult it is for a target vehicle to avoid a collision. Both will be taken into account for decision making in the host vehicle.

When assessing how the host vehicle can maneuver to avoid collision with a target, it is assumed that the motion of the target can be described with a deterministic motion model during a limited prediction horizon $t \in [0, T_{max}]$, e.g. $T_{max} = 2s$. When assessing how the target can maneuver to avoid a collision with the host vehicle, it is assumed that the motion of the host can be described with a deterministic motion model.

The threat assessment method estimates how steering, braking or acceleration may be used in order to avoid a collision during the prediction horizon.

Arbitrary deterministic prediction models may be used. This ensures that the threat assessment method potentially can be applied to rear end collisions, collisions with turning objects, but also other collision scenarios.

The vehicle dynamics of the host vehicle is described by a so-called bicycle model, such that the vehicle slip can be taken into account when judging the possibilities for collision avoidance by steering.

Any vehicle model with two degrees of freedom can applied to the threat assessment method. One degree of freedom is used for assessing the possibility to avoid a collision by steering and one degree of freedom is used for assessing collision avoidance by braking/acceleration. By selecting a host vehicle motion model with two degrees of freedom, if is possible to derive analytical solutions on how to execute a maneuver that avoids a two-dimensional object, e.g. represented with a polygon, at a discrete time step. There is only one way to travel a certain distance in a given time if the longitudinal motion only has one degree of freedom. When steering, there is only one way to steer to pass a corner if the steering maneuver only has one degree of freedom.

Also brake system dynamics of the host vehicle are taken into account to be able to realistically judge the possibilities for collision avoidance by braking.

Target objects may be represented by polygons with arbitrary shape. These can represent different road users such as passenger vehicles, trucks, truck-trailer combinations as well as pedestrians, bicyclists or stationary targets.

The shape of the target is allowed to change over time. This is an important characteristic when e.g. a turning truck-trailer combination is to be represented.

Initially will be described decision making for autonomous braking. Assume that the collision avoidance system is restricted to use of autonomous braking to avoid or mitigate potential collisions. In many prior-art decision-making systems, it is suggested that autonomous brake interventions shall be inhibited if the driver has the opportunity to avoid a collision by either steering or acceleration. This is a conservative approach which is commonly used to minimize the risk of false interventions. An even more conservative approach is proposed here, where interventions in the host vehicle also are inhibited if the target has the opportunity to avoid a collision by either steering, braking or acceleration. Decision making for collision avoidance through autonomous steering or braking/acceleration will be described later.

Assume that the host vehicle or the target can try to avoid a collision by either braking, steering or acceleration. Potential coordinated avoidance maneuvers, where both the host vehicle and target performs a synchronized avoiding maneuver are not assessed. Nor are potential combined braking and steering maneuvers. Although these assumptions may appear to limiting to be useful in practice, they are quite reasonable when assessing critical traffic situations. If the prediction horizon is sufficiently small, e.g. $T_{max} = 2s$, it is reasonable to neglect the possibility for the vehicles to initiate a coordinated avoidance maneuver. A short prediction horizon also motivates the use of deterministic motion models.

Instead of considering coordinated avoidance maneuvers, it is here proposed that the traffic situation shall be assessed both from the host vehicle perspective and the target perspective. First, the set of host vehicle maneuvers that will avoid a collision is estimated, under the assumption that the future trajectory of the target is deterministic and given by the current state of the target. Secondly, the set of target maneuvers that will avoid a collision is estimated, under the assumption that the future trajectory of the host vehicle is deterministic and given by the current state of the host vehicle.

Due to the physical restrictions of the vehicles it is not hard to realize that it is generally easier for either the host vehicle or the target to avoid a collision. For example, assume that the host vehicle is approaching a stationary target in a rear end collision situation. Then, it is always easier for the host vehicle to perform an avoiding maneuver than the other way around. It is here proposed that the host vehicle shall intervene through autonomous braking if it is estimated that: the target cannot avoid a collision on its own, AND; the host vehicle cannot avoid a collision by steering or accelerating, AND; the host vehicle need to use full braking (or significant braking) to avoid a collision.

This method assures that if both the target vehicle and the host vehicle are equipped with the proposed algorithm, potential interventions by the systems will not interfere with each other in e.g. crossing traffic situations.

If neither of the road users can avoid a collision on their own, it is proposed that the host vehicle shall apply the brakes to mitigate a potential collision if the host vehicle needs to decelerate less than the target to avoid a collision.

For simplicity the threat assessment algorithms for estimating how a vehicle can steer, brake or accelerate to avoid a collision will be described from the host vehicle perspective. The algorithms may be modified such that the situation is assessed from the target perspective.

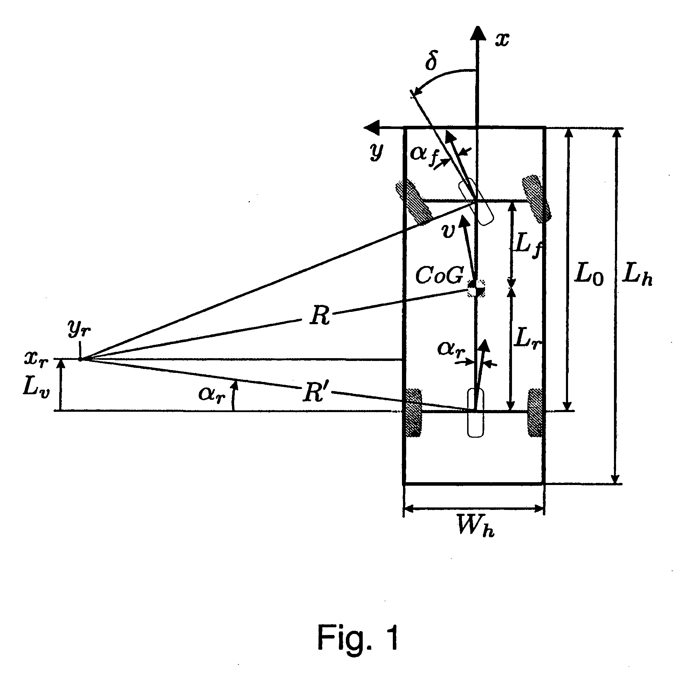

A method is also proposed for estimating how the host vehicle can steer to avoid a collision with the target. It is assumed that the host vehicle speed $v$ is constant during the steering maneuver and that the motion of the host vehicle can be described by a bicycle model, as illustrated in figure 1. The origin of coordinates of a ground-fixed Cartesian coordinate system (x, y) is positioned at the initial position of the front center of the host vehicle. The coordinate system is directed along the center of the initial orientation of the vehicle. The method consists of the steps of:

1. Predicting the motion of the target with an arbitrary deterministic motion model during a limited prediction horizon $t \in [0, T_{max}]$.

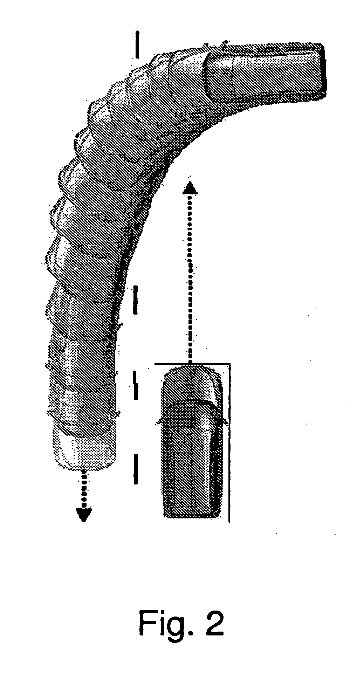

2. Dividing the prediction horizon into a series of discrete time steps $t_i = it_s$ e.g. $t_s = 0.05s$ where $i \in 1,2,.., N$ as illustrated in figure 2.

3. Representing the target as a polygon of arbitrary shape, the corners of the polygon at each discrete time step given by $(x_i, y_i)$. The shape of the polygon can be changed at each time step.

4. For all time steps $t_i$ finding all corners $(x_i, y_i)$ that the host vehicle has to avoid. The relevant corners depend on the host vehicle speed and the length of the host vehicle $L_h$.

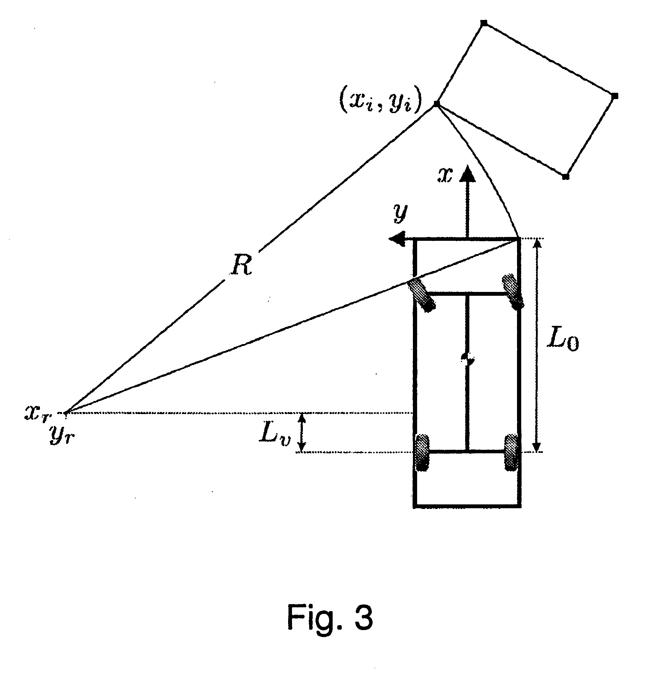

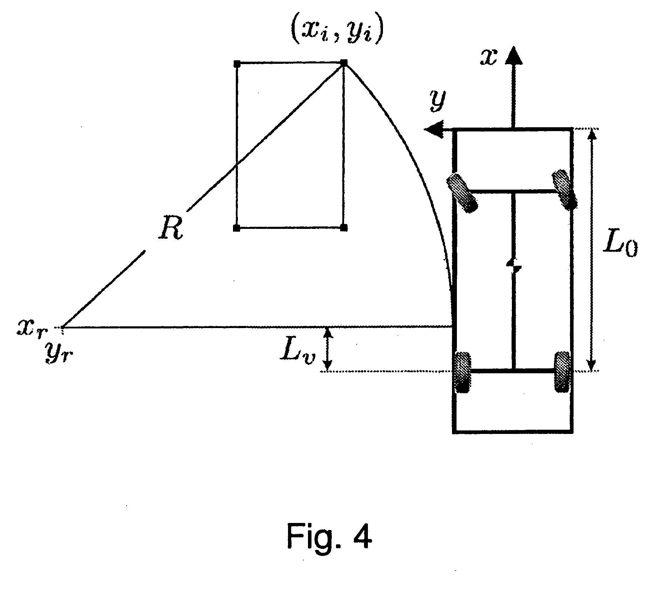

5. For each such corner $(x_i, y_i)$ estimate how the host vehicle need to steer to pass this point to the left or right, as illustrated in figures 3 and 4. Both the front end and the rear end of the host vehicle shall clear the corners.

6. The steering interval that will result in a collision with the target is now given by the smallest steering maneuver that makes the host vehicle clear all polygon corners to the left or the right for all discrete time steps. All steering maneuvers outside this interval may be used to avoid a collision with the target.

This method assumes that the steady-state cornering is instantly obtained, possibly after an initial time delay, $t_d$. Steady-state cornering means that the turn center of the host vehicle, $(x_r, y_r)$ does not change over time and the steering angle $\delta$ is kept constant. The initial time delay can be used to compensate for the transient behavior until steady-state cornering is achieved, e.g. $t_d = 0.2\text{-}0.3s$. During this time delay the host vehicle acceleration, $a$ and steering angle $\delta$ are assumed to remain constant at their initial values. For collision warning applications the time delay can also be used to represent the estimated reaction time of the driver. Time delays are easy to add and will thus be left out in the derivation of the threat assessment algorithm.

The length and width of the host vehicle are given by $L_h$ and $W_h$. The center of gravity is denoted as *CoG* and the distance from the rear axle to *CoG* is given by $L_r$. The distance from the front axle to *CoG* is given by $L_f$ and $L_0$ is the distance from the front center to the rear axle. The rear and front slip angles are given by $\alpha_r$ and $\alpha_f$ respectively. The steering wheel angle can be approximated with

$$\delta = \alpha_r - \alpha_f + (L_f + L_r)/R \qquad (1)$$

where R is the radius of the turn,

$$\alpha_r = -\frac{ML_f v^2}{(L_f + L_r)C_r R} \qquad (2)$$

where typically $\alpha_r \in$ [-0.01,0.01] rad, unless the car is skidding. The front slip angle is given by

$$\alpha_f = \arctan\left(\frac{L_r + L_f}{R} + \tan\alpha_r\right) \qquad (3)$$

where $M$ is the host vehicle mass and $C_r$ is the rear cornering stiffness. The x-coordinate of the turn center is given by

$$x_r = L_v - L_0 \qquad (4)$$

where the longitudinal distance from the rear axle to the turn center is given by

$$L_v = -R\sin\left(\frac{\pi}{2} + \alpha_r - \arcsin\left(\frac{L_r}{R}\cos\alpha_r\right)\right)\tan\alpha_r \qquad (5)$$

which can be approximated with

$$L_v = -R'\sin\alpha_r \approx -R\alpha_r \qquad (6)$$

under the assumption that $\alpha_r$ is small and $R' \approx R$. Using (2) and (6), it is obtained that

$$L_v \approx \frac{ML_f}{(L_f + L_r)C_r}v^2 - kv^2 \qquad (7)$$

where $k$ is a constant that depends on the vehicle weight distribution and rear cornering stiffness. This is a good approximation of $L_v$ at all host vehicle velocities and radius of turn. For most cars, $k \in$ [0,0.01], where $k = 0$ means that the car has neutral steering and $k > 0$ that the car is understeered. Note that (7) is independent of the radius of turn $R$. Thus, during constant cornering, $x_r$ can be approximated with (4) and (7). This property turns out to be very useful when assessing how to turn to avoid obstacles.

Steps 1 - 3 should be straightforward to the person skilled in the art and no additional explanation is therefore given for these steps. Thus, the following description will start with step 4: finding which corners that are relevant to avoid at time $t_i$. Only corners that can be reached at time $t_i$ are relevant to avoid. Since the host vehicle speed $v$ is constant, the relevant corners are all corners where $vt_i - L < x_i < vt_i$. Only corners with positive $x_i$ are considered when clearing with the front end, as illustrated in figure 3. There is no actual need to sort the corners or deselect "hidden corners".

The solution to step 5 is given geometrically. A study of the figures 1, 3 and 4 gives that

$$y_r^{left,front} = \frac{(x_i - x_r)^2 + y_i^2 - x_r^2 - \frac{W_h^2}{4}}{2y_i + W_h} \tag{8}$$

when passing corner $(x_i, y_i)$ on the left side with the front end of the host vehicle. When passing the corner on the left side with the rear end, the turn center is given by

$$y_r^{left,rear} = \frac{(x_i - x_r)^2 + y_i^2 - \frac{W_h^2}{4}}{2y_i + W_h} \tag{9}$$

Similarly, when passing the corner on the right hand side, the turn center is given by

$$y_r^{right,front} = \frac{(x_i - x_r)^2 + y_i^2 - x_r^2 - \frac{W_h^2}{4}}{2y_i - W_h} \tag{10}$$

and

$$y_r^{right,rear} = \frac{(x_i - x_r)^2 + y_i^2 - \frac{W_h^2}{4}}{2y_i - W_h} \tag{11}$$

The radius of turn to pass is then given by

$$R = sign(y_r)\sqrt{y_r^2 + (L_r - L_v)^2} \tag{12}$$

and the corresponding steering angle is given by (1). Store these steering angles for all $t_i$ in two vectors, $\delta_i^{right}$ and $\delta_i^{left}$, corresponding to steering to the left or to the right of the target. The steering interval that will result in a collision is now given by $\delta \in [\delta^{right}, \delta^{left}]$ where

$$\delta^{right} = \min\left(\delta^{right}_i\right) \tag{13}$$

and

$$\delta^{left} = \max\left(\delta^{left}_i\right) \tag{14}$$

Note that the absolute value of the lateral acceleration of the host vehicle

$$a_{lat} = \left| \frac{v^2}{R} \right| \tag{15}$$

is not allowed to exceed $a_{lat}^{max} = 9\,m/s^2$ and $|\delta|$ can typically not exceed 45° in vehicles such as ordinary cars.

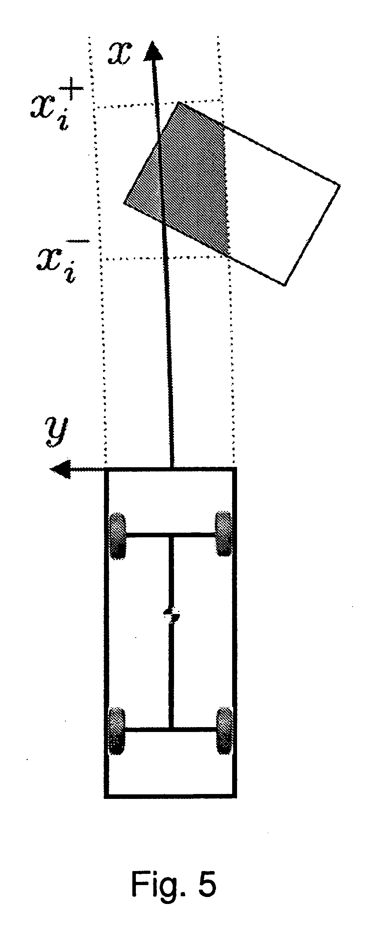

In the following will be described how the host vehicle can use braking or acceleration to avoid a collision with a target. It is assumed that the host vehicle follows a curved, ground-fixed coordinate system, e.g. a clothoid or a turn with constant radius, as illustrated in figure 5. Let the origin of the coordinate system ($x$, $y$) be positioned at the initial position of the front center of the vehicle. The coordinate system is directed along the center of the initial orientation of the host vehicle. Similarly to the steer to avoid method previously described, this method consists of the following steps:

1. Predicting the motion of the target with an arbitrary deterministic motion model during a limited prediction horizon $t \in [0, T_{max}]$.

2. Dividing the prediction horizon into a series of discrete time steps $t_i = it_s$ e.g. $t_s$ = 0.05s where $i \in 1, 2, .., N$ as illustrated in figure 2.

3. Representing the target as a polygon of arbitrary shape, the corners of the polygon at each discrete time step given by ($x_i$, $y_i$). The shape of the polygon can be changed at each time step.

4. For each time step, $t_i$, find all edges of the polygon that the host vehicle has to avoid.

5. For each such edge estimate how the host vehicle need to accelerate to pass the edge or brake to avoid reaching the edge at that specific time step $t_i$.

6. The longitudinal acceleration interval that will result in a collision with the target is now given by the minimum value of all brake to avoid solutions and the maximum value of all accelerate to pass solutions.

Again, step 1 - 3 should be straightforward to the person skilled in the art and no additional explanation is therefore given for these steps. Thus, the following description will once again start with step 4, finding each edge of the target. Let the corners that form each edge be denoted as ($x_1$, $y_1$) and ($x_2$, $y_2$). The edge is relevant if

$$\min(y_1, y_2) \leq \frac{W_h}{2} \text{ and } \max(y_1, y_2) \geq -\frac{W_h}{2}$$

In step 5, start with finding the $x$-interval,

$$x_h \in \left[ x_i^-, x_i^+ + L_h \right],$$

for the position of the host vehicle that will result in a collision at a time $t_i$, as illustrated in figure 5. Let

$$y^{left} = \min\left( \frac{W_h}{2}, \max(y_1, y_2) \right) \tag{16}$$

and

$$y^{right} = \max\left(-\frac{W_h}{2}, \min(y_1, y_2)\right) \qquad (17)$$

Then the interval $x_h \in x_h \in \left[x_i^-, x_i^+ + L_h\right]$ is given by

$$x_i^- = x_1 + \min\left((x_2 - x_1)\frac{y^{left} - y_1}{y_2 - y_1}, (x_2 - x_1)\frac{y^{right} - y_1}{y_2 - y_1}\right) \qquad (18)$$

$$x_i^+ = x_1 + \max\left((x_2 - x_1)\frac{y^{left} - y_1}{y_2 - y_1}, (x_2 - x_1)\frac{y^{right} - y_1}{y_2 - y_1}\right) \qquad (19)$$

In order to avoid collisions where the host vehicle comes to a rest and then is hit from the side or front, let

$$x_i^- = \min(x_i^-, x_{i+1}^-) \forall i \in 1, 2, \dots, N-1 \qquad (20)$$

If min $\left(x_i^-\right) < 0$ a collision can not be avoided by braking. Let the host vehicle velocity and position be given by

$$v(t) = v_0 + \int_0^t a(t')dt' \qquad (21)$$

where $v_0$ is the initial velocity and

$$x_h(t) = \int_0^t v(t')dt' \qquad (22)$$

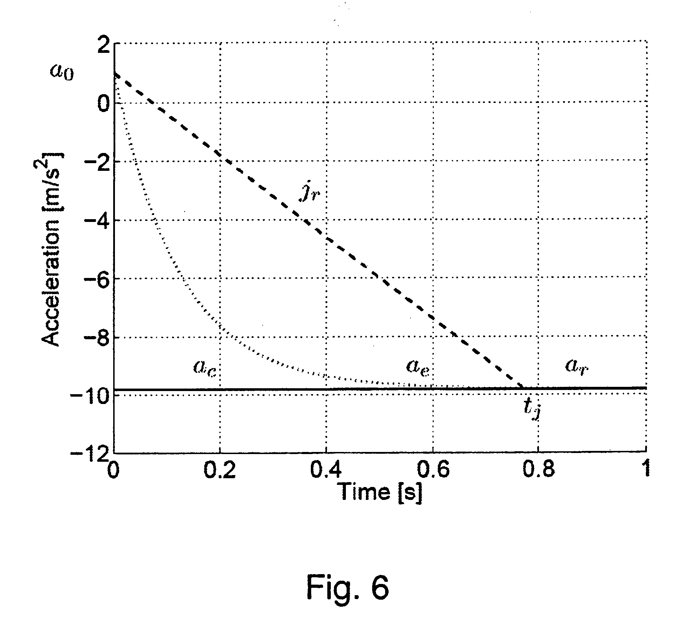

where the acceleration profile $a(t)$ is monotonically decreasing/increasing and has one degree of freedom. Three such acceleration profiles are illustrated in figure 6 and given by (23), (24 and (26).
The first acceleration profile is a piecewise constant acceleration profile

$$a(t) = a_c \qquad (23)$$

where $a_c$ gives the acceleration profile one degree of freedom.
The second acceleration profile is given by

$$a(t) = \begin{cases} a_0 + j_r t & \text{if } t \in \left[0, t_j\right] \\ a_r & \text{if } t < t_j \end{cases} \qquad (24)$$

where $a_0$ is the initial host vehicle acceleration and $a_r = a_0 + j_r t_j$ is the acceleration request.

The acceleration rate $j_r$ is a parameter which gives an acceleration profile one degree of freedom. A suitable selection of the time $t_j$ given by

$$\acute{t}_j = \max\left(0, \frac{a_{\min} - a_0}{j_{\min}}\right) \qquad (25)$$

where $a_{\min}$ is the maximum deceleration that the brake system can accomplish and $j_{\min}$ is maximum deceleration rate. The acceleration profile (24) is representative for many autonomous brake systems.

The third acceleration profile is given by an exponential function

$$a(t) = a_0 + (a_e - a_0)\left(1 - e^{-kt}\right) \qquad (26)$$

where $a_0$ is the initial host vehicle acceleration, $k$ is a constant and $a_e$ is a parameter which gives the acceleration profile one degree of freedom. This profile is representative for brake response when the brakes are applied by the driver.

Select the type of acceleration profile that is representative of the brake system in the host vehicle. Since the profiles only has one degree of freedom, the solution is unique for covering a given distance $x_i^-$ or $x_i^+ + L_h$ in a certain time $t_i$. Derive $x_h(t_i)$ and extract the unknown parameter. The derivation for the profiles (23), (24) and (26) should be straightforward to the person skilled in the art. The analytical solution for the three parameterizations (23), (24) and (26) are given by

$$a_c \doteq \frac{2}{t_i^2}(x_i - vt_i) \qquad (27)$$

Let $\tilde{t}_j = \min(t_j, t_i)$, then the solution to (24) is given by

$$j_r = \frac{x_i - v_0\tilde{t}_j - a_0 \dfrac{\tilde{t}_j^2}{2} - (t_i - \tilde{t}_j)(v + a_0\tilde{t}_j) - a_0 \dfrac{(t_i - \tilde{t}_j)^2}{2}}{\dfrac{\tilde{t}_j^3}{6} + (t_i - \tilde{t}_j)\dfrac{\tilde{t}_j^2}{2} + \tilde{t}_j \dfrac{(t_i - \tilde{t}_j)^2}{2}} \qquad (28)$$

For the exponential acceleration profile (26), the distance travelled at time $t_i$ is given by

$$x_h(t_i) = vt_i + a_e \frac{t_i^2}{2} - \frac{a_e - a_0}{k}t_i - \frac{e^{-kt} - 1}{k^2}(a_e - a_0) \qquad (29)$$

which gives the solution

$$a_e = \frac{x_i - v_0 t_i - a_0\left(\dfrac{t_i}{k} + \dfrac{e^{-kt} - 1}{k^2}\right)}{\dfrac{t_i^2}{2} - \dfrac{t_i}{k} - \dfrac{e^{-kt} - 1}{k^2}} \qquad (30)$$

Time delays representing delays in the brake system or driver reaction time may easily be added. The acceleration interval $[a^-, a^+]$ that will result in a collision within the predicted horizon $t \in [0, T_{max}]$ is given by taking the minimum of the brake to avoid solution and the maximum of the accelerate to pass solution.

Thus, in accordance with the present invention is suggested a method in an automotive vehicle collision avoidance system for autonomous action for avoiding host vehicle collisions with a target. In accordance with the method is provided estimates on the host vehicle state and the target state, e.g. obtained from an in-vehicle sensor fusion system comprising sensors such as radars and cameras that constantly monitor the area in front of the vehicle, possibly combined with vehicle to vehicle communication. The motion of the target is predicted with an arbitrary motion model during a limited prediction horizon. The prediction horizon is divided into a series of discrete time steps. The target is represented as a polygon of arbitrary shape. Boundaries of the polygon that a host vehicle need to avoid for each time step are established. For each such boundary is estimated, using analytical solutions and a motion model for the host vehicle having two degrees of freedom, how the host vehicle need to execute a collision avoidance maneuver in order to avoid reaching said boundary at that specific time step. Finally, a collision avoidance maneuver is executed autonomously based on the result of said estimation for all discrete time steps. When considering how the host vehicle needs to execute the collision avoidance maneuver, this may mean one of two things, either how a driver must act in order to avoid a collision, or how the vehicle must act autonomously in order to avoid a collision.

As indicated above, the motion model for the host vehicle should have two degrees of freedom, one for steering and one for braking/acceleration. Through selecting a motion model having two degrees of freedom, and as the areas, represented by polygons, that the host vehicle will have to avoid at discrete time instances has been made discrete, it is possible to obtain analytical solutions how to steer, brake or accelerate in order to avoid a collision at each discrete time instance. One degree of freedom is used for steering, with the result that there is only one way to steer in order to get to a certain position. The remaining degree of freedom is used for braking/acceleration, with the result that there is only one way to brake/accelerate in order to move a certain distance in a certain time.

In the embodiment providing a method how the host vehicle may steer to avoid a collision the step of establishing boundaries comprises finding all corners of the polygon that the host vehicle has to avoid for all time steps. The step of estimating how the host vehicle need to execute a collision avoidance maneuver comprises estimating for each such corner how the host vehicle need to steer to clear this corner. The step of autonomously executing a collision avoidance maneuver comprises executing a steering maneuver that makes the host vehicle clear all polygon corners for all discrete time steps.

In the embodiment providing a method how the host vehicle may accelerate or brake to avoid a collision the step of establishing boundaries comprises finding all edges of the polygon that the host vehicle has to avoid for each time step. The step of estimating how the host vehicle need to execute a collision avoidance maneuver comprises estimating for each such edge how the host vehicle need to accelerate to pass that edge or brake to avoid reaching that edge at that specific time step. The step of autonomously executing a collision avoidance maneuver comprising executing an acceleration or braking maneuver that makes the host vehicle clear all polygon edges for all discrete time steps.

If neither of the road users can avoid a collision on their own by steering or accelerating, it is proposed that the method further should comprise: autonomously executing autonomous braking if it is estimated that: - the target cannot avoid a collision on its own, and; - the host vehicle cannot avoid a collision by steering or accelerating, and; - the host vehicle need to use significant braking to avoid a collision, then the host vehicle shall apply the brakes to mitigate a potential collision. Significant braking as used herein means braking utilizing the braking abilities of the host vehicle braking system to the fullest degree allowed by the current circumstances.

The present invention also relates to an automotive vehicle collision avoidance system for autonomous action for avoiding host vehicle collisions with a target as described above and comprising means for performing the above described steps.

The present invention also relates to an automotive vehicle comprising an automotive vehicle collision avoidance system including an implementation of the method for autonomous action for avoiding host vehicle collisions with a target as described above.

The invention is not limited to the above-described embodiments, but may be varied within the scope of the following claims.

Thus, while there have been shown and described and pointed out fundamental novel features of the invention as applied to a preferred embodiment thereof, it will be understood that various omissions and substitutions and changes in the form and details of the devices illustrated, and in their operation, may be made by those skilled in the art. For example, it is expressly intended that all combinations of those elements and/or method steps which perform substantially the same function in substantially the same way to achieve the same results are within the scope of the invention. Moreover, it should be recognized that structures and/or elements and/or method steps shown and/or described in connection with any disclosed form or embodiment of the invention may be incorporated in any other disclosed or described or suggested form or embodiment as a general matter of design choice. It is the intention, therefore, to be limited only as indicated by the scope of the claims appended hereto.

**Claims**

1. A method in an automotive vehicle collision avoidance system for autonomous action for avoiding host vehicle collisions with a target, comprising the steps of:

   providing estimates on the host vehicle state with respect to its dimensions, velocity, acceleration, yaw rate and/or orientation and the target state with respect to its dimensions, velocity, acceleration, yaw rate and/or orientation; and
   predicting the motion of the target with a deterministic motion model during a limited prediction time horizon (t); and
   dividing the prediction time horizon (t) into a series of discrete time steps ($t_i$); **characterised by** :

   representing the target as a polygon; and
   establishing boundaries of the polygon that the host vehicle needs to avoid for each time step ($t_i$); and
   estimating, using analytical solutions and a motion model for the host vehicle having two degrees of freedom, for each such boundary how the host vehicle need to execute a collision avoidance maneuver in order to avoid reaching said boundary at that specific time step ($t_i$); and
   autonomously executing a collision avoidance maneuver based on the result of said estimation for all discrete time steps ($t_i$).

2. A method according to claim 1,
   **characterized in that**:

   the step of establishing boundaries comprises finding all corners ($x_i$, $y_i$) of the polygon that the host vehicle has to avoid for all time steps ($t_i$); and
   the step of estimating how the host vehicle need to execute a collision avoidance maneuver comprises estimating for each such corner ($x_i$, $y_i$) how the host vehicle need to steer to clear this corner ($x_i$, $y_i$); and
   the step of autonomously executing a collision avoidance maneuver comprising executing a steering maneuver that makes the host vehicle clear all polygon corners ($x_i$, $y_i$) for all discrete time steps ($t_i$).

3. A method according to claim 1,
   **characterized in that**:

   the step of establishing boundaries comprises finding all edges of the polygon that the host vehicle has to avoid for each time step ($t_i$); and
   the step of estimating how the host vehicle need to execute a collision avoidance maneuver comprises estimating for each such edge how the host vehicle need to accelerate to pass that edge or brake to avoid reaching that edge at that specific time step ($t_i$); and
   the step of autonomously executing a collision avoidance maneuver comprising executing an acceleration or braking maneuver that makes the host vehicle clear all polygon edges for all discrete time steps ($t_i$).

4. A method according to any one of claims 1 to 3,
   **characterized in that** it further comprises:

   autonomously executing autonomous braking if it is estimated that:

   - the target cannot avoid a collision on its own, and;
   - the host vehicle cannot avoid a collision by steering or accelerating, and;
   - the host vehicle need to use significant braking to avoid a collision.

5. An automotive vehicle collision avoidance system for autonomous action for avoiding host vehicle collisions with a target, comprising:

   means for providing estimates on the host vehicle state with respect to its dimensions, velocity, acceleration, yaw rate and/or orientation and the target state with respect to its dimensions, velocity, acceleration, yaw rate and/or orientation; and
   means for predicting the motion of the target with a deterministic motion model during a limited prediction time horizon (t); and

means for dividing the prediction time horizon (t) into a series of discrete time steps ($t_i$); and
further **characterized in that** it comprises:

means for representing the target as a polygon; and
means for establishing boundaries of the target that the host vehicle needs to avoid for each time step ($t_i$); and
means for estimating, using analytical solutions and a motion model for the host vehicle having two degrees of freedom, for each such boundary how the host vehicle need to execute a collision avoidance maneuver in order to avoid reaching said boundary at that specific time step ($t_i$); and
means for autonomously executing a collision avoidance maneuver based on the result of said estimation for all discrete time steps ($t_i$).

6. A system according to claims 5,
**characterized in that**:

the means for establishing boundaries comprises means for finding all corners ($x_i$, $y_i$) of the polygon that the host vehicle has to avoid for all time steps ($t_i$); and
the means for estimating how the host vehicle need to execute a collision avoidance maneuver comprises means for estimating for each such corner ($x_i$, $y_i$) how the host vehicle need to steer to clear this corner ($x_i$, $y_i$); and
the means for autonomously executing a collision avoidance maneuver comprising means for executing a steering maneuver that makes the host vehicle clear all polygon corners ($x_i$, $y_i$) for all discrete time steps ($t_i$).

7. A system according to claim 5,
**characterized in that**:

the means for establishing boundaries comprises means for finding all edges of the target that the host vehicle has to avoid for each time step ($t_i$); and
the means for estimating how the host vehicle need to execute a collision avoidance maneuver comprises means for estimating for each such edge how the host vehicle need to accelerate to pass that edge or brake to avoid reaching that edge at that specific time step ($t_i$); and
the means for autonomously executing a collision avoidance maneuver comprising means for executing an acceleration or braking maneuver that makes the host vehicle clear all target edges for all discrete time steps ($t_i$).

8. A system according to any one of claims 5 to 7,
**characterized in that** it further comprises:

means for autonomously executing autonomous braking if it is estimated that:

- the target cannot avoid a collision on its own, and;
- the host vehicle cannot avoid a collision by steering or accelerating, and;
- the host vehicle need to use significant braking to avoid a collision.

9. An automotive vehicle, **characterized in that** it comprises an automotive vehicle collision avoidance system according to any one of claims 5 to 8.

**Patentansprüche**

1. Verfahren in einem System zur Kraftfahrzeugkollisionsvermeidung für autonomen Betrieb zum Vermeiden von Trägerfahrzeugkollisionen mit einem Ziel, mit den folgenden Schritten:

Bereitstellen von Schätzungen über den Zustand des Trägerfahrzeugs in Bezug auf seine Abmessungen, Geschwindigkeit, Beschleunigung, Giergeschwindigkeit und/oder Orientierung und den Zustand des Ziels in Bezug auf seine Abmessungen, Geschwindigkeit, Beschleunigung, Giergeschwindigkeit und/oder Orientierung; und
Vorhersagen der Bewegung des Ziels mit einem deterministischen Bewegungsmodell während eines begrenzten Vorhersagezeithorizonts (t); und
Aufteilen des Vorhersagezeithorizonts (t) in eine Reihe von diskreten Zeitabschnitten ($t_i$); **gekennzeichnet durch**:

Darstellen des Ziels als ein Polygon; und

Festlegen von Grenzen des Polygons, die das Trägerfahrzeug für jeden Zeitabschnitt ($t_i$) vermeiden muss; und

Schätzen für jede derartige Grenze unter Verwendung analytischer Lösungen und eines Bewegungsmodells für das Trägerfahrzeug, das zwei Freiheitsgrade aufweist, wie das Fahrzeug ein Kollisionsvermeidungsmanöver ausführen muss, um das Erreichen der Grenze in einem bestimmten Zeitabschnitt ($t_i$) zu vermeiden; und

autonomes Ausführen eines Kollisionsvermeidungsmanövers basierend auf dem Ergebnis der Schätzung für alle diskreten Zeitabschnitte ($t_i$).

2. Verfahren nach Anspruch 1,
**dadurch gekennzeichnet, dass**
der Schritt des Festlegens von Grenzen das Suchen aller Ecken ($x_i$, $y_i$) des Polygons umfasst, die das Trägerfahrzeug für alle Zeitabschnitte ($t_i$) vermeiden muss; und

der Schritt des Schätzens, wie das Trägerfahrzeug ein Kollisionsvermeidungsmanöver ausführen muss, für jede derartige Ecke ($x_i$, $y_i$) das Schätzen, wie das Trägerfahrzeug steuern muss, um diese Ecke ($x_i$, $y_i$) zu vermeiden, umfasst; und

der Schritt des autonomen Ausführens eines Kollisionsvermeidungsmanövers das Ausführen eines Steuermanövers umfasst, welches das Trägerfahrzeug alle Polygonecken ($x_i$, $y_i$) für alle diskreten Zeitabschnitte ($t_i$) freigeben lässt.

3. Verfahren nach Anspruch 1,
**dadurch gekennzeichnet, dass**
der Schritt des Festlegens von Grenzen das Suchen aller Kanten des Polygons umfasst, die das Trägerfahrzeug für jeden Zeitabschnitt ($t_i$) vermeiden muss; und

der Schritt des Schätzens, wie das Trägerfahrzeug ein Kollisionsvermeidungsmanöver ausführen muss, für jede derartige Kante das Schätzen umfasst, wie das Trägerfahrzeug beschleunigen muss, um an dieser Kante vorbeizufahren, oder bremsen muss, um das Erreichen dieser Kante in diesem speziellen Zeitabschnitt ($t_i$) zu vermeiden; und

der Schritt des autonomen Ausführens eines Kollisionsvermeidungsmanövers das Ausführen eines Beschleunigungs- oder Bremsmanövers umfasst, welches das Trägerfahrzeug alle Polygonkanten für alle diskreten Zeitabschnitte ($t_i$) freigeben lässt.

4. Verfahren nach einem der Ansprüche 1 bis 3,
**dadurch gekennzeichnet, dass** es ferner Folgendes umfasst:

autonomes Ausführen einer autonomen Bremsung, wenn geschätzt wird, dass:

- das Ziel eine Kollision nicht allein vermeiden kann und;
- das Trägerfahrzeug eine Kollision nicht durch Steuern oder Beschleunigen vermeiden kann und;
- das Trägerfahrzeug eine erhebliche Bremsung ausführen muss, um eine Kollision zu vermeiden.

5. System zur Kraftfahrzeugkollisionsvermeidung für autonomen Betrieb zum Vermeiden von Trägerfahrzeugkollisionen mit einem Ziel, das Folgendes umfasst:

Mittel zum Bereitstellen von Schätzungen über den Zustand des Trägerfahrzeugs in Bezug auf seine Abmessungen, Geschwindigkeit, Beschleunigung, Giergeschwindigkeit und/oder Orientierung und über den Zustand des Ziels in Bezug auf seine Abmessungen, Geschwindigkeit, Beschleunigung, Giergeschwindigkeit und/oder Orientierung; und

Mittel zum Vorhersagen der Bewegung des Ziels mit einem deterministischen Bewegungsmodell während eines begrenzten Vorhersagezeithorizonts ($t$); und

Mittel zum Aufteilen des Vorhersagezeithorizonts ($t$) in eine Reihe von diskreten Zeitabschnitten ($t_i$); und

das ferner **dadurch gekennzeichnet ist, dass** es Folgendes umfasst:

Mittel zum Darstellen des Ziels als ein Polygon; und

Mittel zum Festlegen von Grenzen des Ziels, die das Trägerfahrzeug für jeden Zeitabschnitt ($t_i$) vermeiden muss; und

Mittel zum Schätzen für jede derartige Grenze unter Verwendung analytischer Lösungen und eines Bewegungsmodells für das Trägerfahrzeug, das zwei Freiheitsgrade aufweist, wie das Fahrzeug ein Kollisionsvermeidungsmanöver ausführen muss, um das Erreichen, der Grenze in einem bestimmten Zeitabschnitt ($t_i$) zu vermeiden; und

Mittel zum autonomen Ausführen eines Kollisionsvermeidungsmanövers basierend auf dem Ergebnis der Schätzung für alle diskreten Zeitabschnitte ($t_i$).

6. System nach Anspruch 5,
**dadurch gekennzeichnet, dass**:

die Mittel zum des Festlegen von Grenzen Mittel zum Suchen aller Ecken ($x_i$, $y_i$) des Polygons umfassen, die das Trägerfahrzeug für alle Zeitabschnitte ($t_i$) vermeiden muss; und

die Mittel zum Schätzen, wie das Trägerfahrzeug ein Kollisionsvermeidungsmanöver ausführen muss, Mittel zum Schätzen für jede derartige Ecke ($x_i$, $y_i$), wie das Trägerfahrzeug steuern muss, um diese Ecke ($x_i$, $y_i$) freizugeben, umfassen; und

die Mittel zum autonomen Ausführen eines Kollisionsvermeidungsmanövers Mittel zum Ausführen eines Steuermanövers umfassen, welches das Trägerfahrzeug alle Polygonecken ($x_i$, $y_i$) für alle diskreten Zeitabschnitte ($t_i$) freigeben lässt.

7. System nach Anspruch 5,
**dadurch gekennzeichnet, dass**:

die Mittel zum Festlegen von Grenzen Mittel zum Suchen aller Kanten des Ziels umfassen, welche das Trägerfahrzeug für jeden Zeitabschnitt ($t_i$) vermeiden muss; und

die Mittel zum Schätzen, wie das Trägerfahrzeug ein Kollisionsvermeidungsmanöver ausführen muss, Mittel zum Schätzen für jede derartige Kante umfassen, wie das Trägerfahrzeug beschleunigen muss, um an dieser Kante vorbeizufahren, oder bremsen muss, um das Erreichen dieser Kante in diesem speziellen Zeitabschnitt ($t_i$) zu vermeiden; und

die Mittel zum autonomen Ausführen eines Kollisionsvermeidungsmanövers Mittel zum Ausführen eines Beschleunigungs- oder Bremsmanövers umfassen, welches das Trägerfahrzeug alle Zielkanten für alle diskreten Zeitabschnitte ($t_i$) freigeben lässt.

8. System nach einem der Ansprüche 5 bis 7,
**dadurch gekennzeichnet, dass** es ferner Folgendes umfasst :

Mittel zum autonomen Ausführen einer autonomen Bremsung, wenn geschätzt ist, dass:

- das Ziel eine Kollision nicht allein vermeiden kann und
- das Trägerfahrzeug eine Kollision nicht durch Steuern oder Beschleunigen vermeiden kann und
- das Trägerfahrzeug eine erhebliche Bremsung ausführen muss, um eine Kollision zu vermeiden.

9. Kraftfahrzeug, **dadurch gekennzeichnet, dass** es ein System zur Kraftfahrzeugkollisionsvermeidung nach einem der Ansprüche 5 bis 8 umfasst.

**Revendications**

1. Procédé dans un système d'évitement de collision de véhicule automobile pour une action autonome afin d'éviter les collisions du véhicule hôte avec une cible, comprenant les étapes consistant à :

fournir des estimations sur l'état du véhicule hôte par rapport à ses dimensions, sa vitesse, son accélération, son amplitude du mouvement de lacet et/ou son orientation et sur l'état de la cible par rapport à ses dimensions, sa vitesse, son accélération, son amplitude du mouvement de lacet et/ou son orientation ; et à

prédire le mouvement de la cible avec un modèle de mouvement déterministe pendant un horizon temporel de prédiction limité (t) ; et à

diviser cet horizon temporel de prédiction (t) en une série de pas temporels discrets ($t_i$) ; **caractérisé par**

la représentation de la cible comme un polygone ; et par

l'établissement de limites du polygone que le véhicule hôte doit éviter pour chaque pas temporel ($t_i$) : et par l'estimation, en utilisant des solutions analytiques et un modèle de mouvement pour le véhicule hôte ayant deux degrés de liberté, pour chaque telle limite, de comment le véhicule hôte doit exécuter une manoeuvre d'évitement de collision afin d'éviter d'atteindre ladite limite à ce pas temporel spécifique ($t_i$) ; et par l'exécution autonome d'une manoeuvre d'évitement de collision basée sur le résultat de ladite estimation pour tous les pas temporels discrets ($t_i$).

2. Procédé selon la revendication 1,
**caractérisé en ce que :**

l'étape d'établissement de limites comprend la découverte de tous les coins ($x_i$, $y_i$) du polygone que le véhicule hôte doit éviter pour tous les pas temporels ($t_i$) ; et

l'étape d'estimation de comment le véhicule hôte doit exécuter une manoeuvre d'évitement de collision comprend l'estimation, pour chaque tel coin ($x_i$, $y_i$), de comment le véhicule hôte doit changer de direction pour dépasser ce coin ($x_i$, $y_i$) ; et

l'étape d'exécution autonome d'une manoeuvre d'évitement de collision comprend l'exécution d'une manoeuvre de changement de direction qui fait que le véhicule hôte dépasse tous les coins du polygone ($x_1$, $y_i$) pour tous les pas temporels discrets ($t_i$).

3. Procédé selon la revendication 1,
**caractérisé en ce que :**

l'étape d'établissement de limites comprend la découverte de tous les bords du polygone que le véhicule hôte doit éviter pour chaque pas temporel ($t_i$) ; et

l'étape d'estimation de comment le véhicule hôte doit exécuter une manoeuvre d'évitement de collision comprend l'estimation, pour chaque tel bord, de comment le véhicule hôte doit accélérer pour passer ce bord ou freiner pour éviter d'atteindre ce bord à ce pas temporel spécifique (ti) ; et

l'étape d'exécution autonome d'une manoeuvre d'évitement de collision comprend l'exécution d'une manoeuvre d'accélération ou de freinage qui fait que le véhicule hôte dépasse tous les bords du polygone pour tous les pas temporels discrets ($t_i$).

4. Procédé selon l'une quelconque des revendications 1 à 3,
**caractérisé en ce qu'il comprend en outre :**

l'exécution autonome du freinage autonome s'il est estimé que :

- la cible ne peut pas éviter de collision à elle seule, et
- le véhicule hôte ne peut pas éviter de collision en changeant de direction ou en accélérant, et
- le véhicule hôte doit utiliser un freinage important pour éviter une collision.

5. Système d'évitement de collision de véhicule automobile pour une action autonome pour éviter des collisions du véhicule hôte avec une cible, comprenant :

un moyen pour fournir des estimations sur l'état du véhicule hôte par rapport à ses dimensions, sa vitesse, son accélération, son amplitude du mouvement de lacet et/ou son orientation et sur l'état de la cible par rapport à ses dimensions, sa vitesse, son accélération, son amplitude du mouvement de lacet et/ou son orientation ; et

un moyen pour prédire le mouvement de la cible avec un modèle de mouvement déterministe pendant un horizon temporel de prédiction limité (t) ; et

un moyen pour diviser cet horizon temporel de prédiction (t) en une série de pas temporels discrets (ti) ; et
**caractérisé en outre en ce qu'il comprend :**

un moyen pour représenter la cible comme un polygone ; et

un moyen pour établir les limites de la cible que le véhicule hôte doit éviter pour chaque pas temporel ($t_i$) ; et

un moyen pour estimer, en utilisant des solutions analytiques et un modèle de mouvement pour le véhicule hôte ayant deux degrés de liberté, pour chaque telle limite, comment le véhicule hôte doit exécuter une manoeuvre d'évitement de collision afin d'éviter d'atteindre ladite limite à ce pas temporel spécifique ($t_i$) ; et

un moyen pour exécuter de manière autonome une manoeuvre d'évitement de collision basée sur le résultat de ladite estimation pour tous les pas temporels discrets ($t_i$).

6. Système selon la revendication 5,
**caractérisé en ce que :**

le moyen pour établir des limites comprend un moyen pour trouver tous les coins ($x_i$, $y_i$) du polygone que le véhicule hôte doit éviter pour tous les pas temporels ($t_i$) ; et

le moyen pour estimer comment le véhicule hôte doit exécuter une manoeuvre d'évitement de collision comprend un moyen pour estimer, pour chaque tel coin ($x_i$, $y_i$), comment le véhicule hôte doit changer de direction pour dépasser ce coin ($x_i$, $y_i$) ; et

le moyen pour exécuter de manière autonome une manoeuvre d'évitement de collision comprend un moyen pour exécuter une manoeuvre de changement direction qui fait que le véhicule hôte dépasse tous les coins du polygone ($x_i$, $y_i$) pour tous les pas temporels discrets ($t_i$).

7. Système selon la revendication 5,
   **caractérisé en ce que :**

   le moyen pour établir des limites comprend un moyen pour trouver tous les bords de la cible que le véhicule hôte doit éviter pour chaque pas temporel ($t_i$) ; et

   le moyen pour estimer comment le véhicule hôte doit exécuter une manoeuvre d'évitement de collision comprend un moyen pour estimer, pour chaque tel bord, comment le véhicule hôte doit accélérer pour passer ce bord ou freiner pour éviter d'atteindre ce bord à ce pas temporel spécifique ($t_i$) ; et

   le moyen pour exécuter de manière autonome une manoeuvre d'évitement de collision comprend un moyen pour exécuter une manoeuvre d'accélération ou de freinage qui fait que le véhicule hôte dépasse tous les bords de la cible pour tous les pas temporels discrets ($t_i$).

8. Système selon l'une quelconque des revendications 5 à 7,
   **caractérisé en ce qu'il comprend en outre :**

   un moyen pour exécuter de manière autonome le freinage autonome s'il est estimé que :

   - la cible ne peut pas éviter de collision à elle seule, et
   - le véhicule hôte ne peut pas éviter de collision en changeant de direction ou en accélérant, et
   - le véhicule hôte doit utiliser un freinage important pour éviter une collision.

9. Véhicule automobile, **caractérisé en ce qu'**il comprend un système d'évitement de collision de véhicule automobile selon l'une quelconque des revendications 5 à 8.

Fig. 1

Fig. 2

Fig. 3

Fig. 4

$x$

$x_i^+$

$x_i^-$

$y$

## Fig. 5

## Fig. 6

**EP 2 208 654 B1**

**Patent documents cited in the description**

- WO 2008031662 A